**Europäisches Patentamt**

**European Patent Office**

**Office européen des brevets**

(11) Publication number:

**0 194 400**
**B1**

(12) **EUROPEAN PATENT SPECIFICATION**

(45) Date of publication of patent specification: **21.02.90**

(21) Application number: **85850083.8**

(22) Date of filing: **11.03.85**

(51) Int. Cl.⁵: **H 02 P 1/28**

(54) **A method of starting an asynchronous motor and an apparatus for carrying said method into effect.**

(43) Date of publication of application:
**17.09.86 Bulletin 86/38**

(45) Publication of the grant of the patent:
**21.02.90 Bulletin 90/08**

(84) Designated Contracting States:
**AT BE CH DE FR GB IT LI NL**

(56) References cited:
**EP-A-0 077 118**
**US-A-4 015 178**
**US-A-4 052 648**

**PATENT ABSTRACTS OF JAPAN, vol. 4, no. 162
(E-33), 12th November 1980, page 37 E 33; & JP -
A - 55 109 180**

(73) Proprietor: **EL-FI INNOVATIONER AB
Ängelholmsvägen 23
S-250 07 Helsingborg (SE)**

(72) Inventor: **Elfner, Bo Ake
Skarpskyttevägen 24 B
S-222 42 Lund (SE)**

(74) Representative: **Berglund, Gustav Arthur et al
AWAPATENT AB Box 5117
S-200 71 Malmö (SE)**

Courier Press, Leamington Spa, England.

## Description

The present invention relates to a method of starting asynchronous motors and to an apparatus for carrying said method into effect.

When an asynchronous motor comprising a shortcircuited rotor is started by direct connection of the motor to the line voltage, the asynchronous motor uses an amount of current which is large in relation to the rated current, for example 4—8 times the rated current. This may result in an intense heat build-up in the motor, but usually the heat is quickly dissipated when the motor attains its normal operating speed so that the windings normally do not reach any unacceptably high temperature.

Nevertheless, it is advisable to avoid large amounts of starting current, on the one hand because of the risks of harmful excess temperatures in the windings upon repeated starts and, on the other hand, because the supply mains then is subjected to undesired voltage reductions that may negatively affect other loads connected to the mains. Furthermore, a motor start using a high starting current puts a strain on the driven system which thus may be subjected to an undesired mechanical chock.

Star-delta switching upon start of an asynchronous motor is previously known, and in this manner the initial power output is reduced in relation to the rated output. It is also known to use a starting transformer. Finally, it is already known to start a phase-controlled asynchronous motor by successively increasing the voltage applied to the motor during a selectable period of time from an initial value to a final value (see for example EP—A—77 118). Obviously, the initial value should be as low as possible because this makes it possible to attain a desired low starting current. However, if the inital value is set too low, there is a risk that the requisite power for turning the motor will not be supplied until after an unacceptably high heat build-up has occurred in the stator. In view hereof, the initial value of the power supplied must be selected with a sufficient safety margin to avoid damage to the motor by overheating upon start, simultaneously as the starting current should be set as low as possible.

The present invention aims at eliminating the risk of overheating upon start of an asynchronous motor, at preventing undesired voltage reductions in the supply mains, and at avoiding excessive mechanical strain on the systems driven by the motor.

To achieve these objects, the method and the apparatus according to the present invention have been given the characteristic features stated in the appended claims 1, 5 and 6.

The invention will now be described in more detail, reference being had to the accompanying drawings.

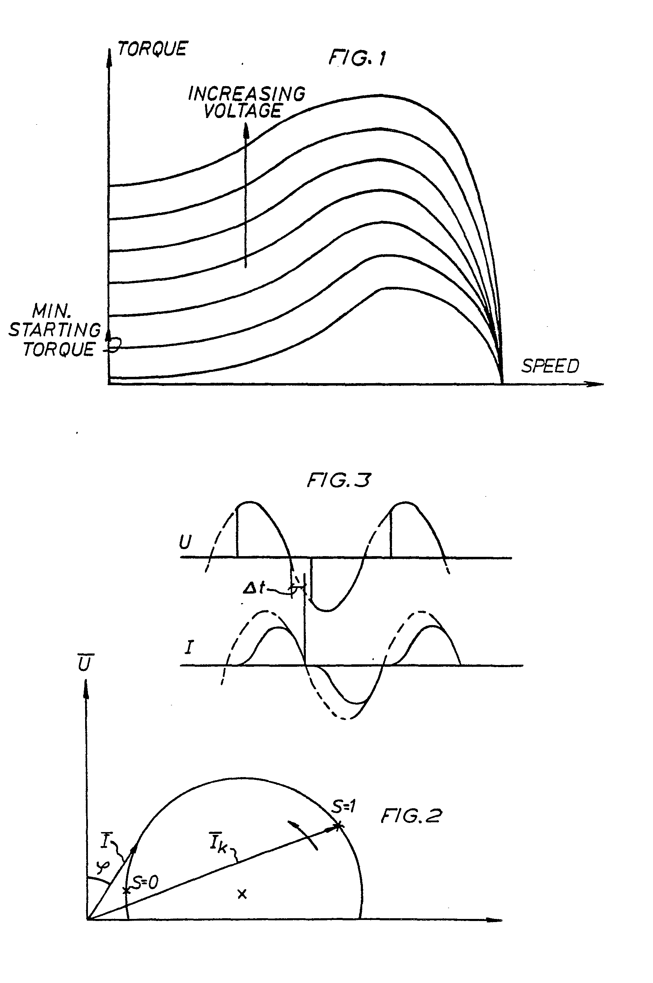

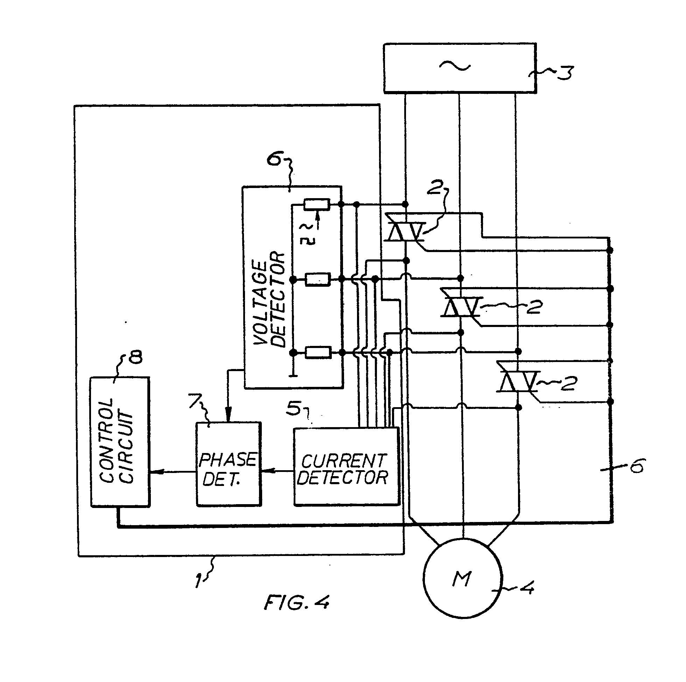

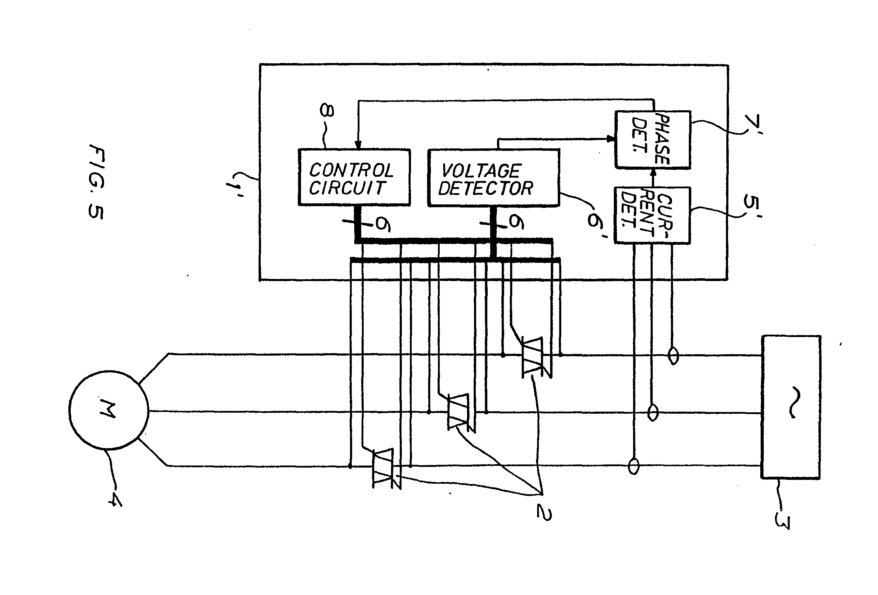

Fig. 1 is a diagram showing the torque of an asynchronous motor as a function of the speed, and with the motor voltage as a parameter. Fig. 2 illustrates schematically a circle diagram of an asynchronous motor. Fig. 3 gives an example of the motor voltage and motor current during phase control of an asynchronous motor. Fig. 4 is a block diagram of a preferred embodiment of the apparatus according to the present invention. Fig. 5 is a circuit diagram of a second embodiment of the apparatus according to the present invention.

In the diagram according to Fig. 4, use is made of a control device 1 for controlling three thyristor switches 3 for controlling the voltage supplied by a three-phase AC source 3 to a three-phase shortcircuited asynchronous motor 4. The control device 1 comprises a current detector 5 with optocouplers connected in pairs each across one thyristor 2 in series with a resistor for generating logic signals. More particularly, each resistor is connected in series with a parallel circuit comprising two antiparallel-connected light-emitting diodes included each in one optocoupler. The two associated photo transistors of the same optocoupler are connected in parallel. The said logic signals represent the phase of the current through the respective thyristor 2 and, more particularly, indicate the times of the current crossovers. The control device also comprises a voltage detector 6 which is connected to the phase line/lines of the motor 4 ahead of one or more of said thyristors 2 and has a resistor network and two antiparallel-connected diodes for generating a signal representing the phase of the respective phase voltage, as well as a phase detector 7 for generating a signal representing the phase difference between the motor voltage and the motor current. Furthermore, the control device 1 comprises a control circuit 8 with means for detecting in the said phase difference a change exceeding a predetermined value, as well as means for quickly increasing, upon start of the motor, the proportion of the half periods of the AC voltage applied to the motor, during which proportion the motor is supplied with current, until the said change in phase difference is detected, whereupon the said proportion is increased more slowly until the power supplied has attained its full value. The reason for this arrangement is explained below.

The group of curves shown in Fig. 1 illustrate the torque developed by an asynchronous motor as a function of the speed, with the motor voltage as parameter. Naturally, the torque increases with an increase in the motor voltage. To start an asynchronous motor, the torque must exceed a given minimum value, and the voltage corresponding to this minimum torque value would thus be the ideal voltage from which a successive increase in the motor voltage to full motor voltage would take place if it is desired to obtain as low a starting current as possible. However, this ideal voltage value may vary and thus cannot be predetermined.

To eliminate the above-mentioned difficulty, the present invention utilises a relationship that may be explained with reference to Fig. 2 which shows the magnitude and the phase of the motor current relative to the phase of the motor voltage.

The instant the rotor of the asynchronous motor starts to turn and until its normal operating speed has been attained, the motor current vector changes from a value $\bar{I}_k$, the apex of the current vector following a circular arc from a point with the lag s = 1, i.e. stationary rotor, to a point where s approaches the value 0. Once the rotor starts to turn, a change occurs in the phase position of the current vector, and an embodiment of the present invention utilises the occurrence of this phase change as an indication of the fact that the rotor has begun to turn. After this change of phase has been detected, the voltage applied to the motor therefore is increased more slowly until full motor voltage has been attained.

The present invention thus provides for a starting current which is as low as possible and, at the same time, minimises the risk of overheating of the motor windings.

Since the phase control of an asynchronous motor does not give continuous sine signals, the phase difference between the motor voltage and the motor current must be considered to be defined in a manner equivalent to the conditions prevailing with continuous signals. With reference to Fig. 3, the phase difference between the motor voltage and the motor current is determined in this instance on the basis of the time difference $\triangle t$ between the voltage crossover and the current crossover. It should be observed that, in each crossover of the current through any of the thyristors 2, the optocouplers generate a voltage spike, and that this occurs entirely independently of the magnitude of the phase difference between the motor voltage and the motor current.

In the alternative embodiment illustrated in Fig. 5, the control device 1' according to the present invention comprises a current detector 5' which, by means of a current transformer in each phase line, generates a signal representing the phase of the phase current, a voltage detector 6' with inputs each connected across one of the thyristor switches 2 to generate a signal representing the phase of the respective phase voltage, and a phase detector 7' for generating a signal representing the phase difference between the motor voltage and the motor current. In other respects, this alternative embodiment corresponds to the preferred one.

## Claims

1. A method of starting an asynchronous motor (4), characterised in that the voltage supplied is rapidly increased until a change in the derivative of the phase shift between the voltage applied and the current supplied is detected, and that the voltage supplied then is increased more slowly until the voltage supplied has attained its full value.

2. A method as claimed in claim 1, in which the motor (4) is phase-controlled by means of thyristor switches (2), characterised in that the voltage supplied is increased by increasing the proportion of the half periods of the AC voltage applied to the motor, during which proportion the motor is supplied with current.

3. A method as claimed in claim 2, characterised in that the phase shift is determined by sensing the phase position of the current supplied to the motor, as sensed by means of optocouplers, relative to the phase position of the voltage applied by means of the thyristor switches (2), as sensed ahead of the thyristor switches (2).

4. A method as claimed in claim 2 or 3, characterised in that the said phase shift is measured as the difference ($\triangle t$) between the voltage crossover and the current crossover.

5. An apparatus for carrying the method as claimed in claim 1 into effect, during start of an asynchronous motor (4) phase-controlled by means of thyristor switches, characterised by a current detector (5) for generating a signal representing the phase of the motor current, a voltage detector (6) for generating a signal representing the phase of the motor voltage, a phase detector (7) for generating a signal representing the phase shift between the motor voltage and the motor current, means (8) for detecting a change in the derivative of the phase shift, and means (8) for rapidly increasing, on start of the motor, the proportion of the half periods of the AC voltage applied to the motor, during which proportion the motor is supplied with current, until the change in the derivative of the phase shift is detected, and for then increasing the said proportion more slowly until the voltages supplied has attained its full value.

6. An apparatus for controlling the start of an asynchronous motor (4) phase-controlled by means of thyristor switches, characterised by a current detector (5) for generating a signal representing the phase of the motor current, a voltage detector (6) for generating a signal representing the phase of the motor voltage, a phase detector (7) for generating a signal representing the phase difference between the motor voltage and the motor current, means (8) for detecting a change, exceeding a predetermined value, in the said phase difference, and means (8) for rapidly increasing, on start of the motor, the proportion of the half periods of the AC voltage applied to the motor, during which proportion the motor is supplied with current, until the said change in the phase difference is detected, and for then increasing the said proportion more slowly until the voltage supplied has attained its full value.

## Patentansprüche

1. Verfahren zum Anlassen eines Asynchronmotors (4), dadurch gekennzeichnet, dass die zugeführte Spannung rasch so lange gesteigert wird, bis eine Änderung in der Derivierten der Phasenverschiebung zwischen der angelegten Spannung und dem zugeführte Strom ermittelt wird, und dass die zugeführte Spannung dann langsamer gesteigert wird, bis die zugeführte Spannung ihren vollen Wert erreicht hat.

2. Verfahren nach Anspruch 1, bei dem der Motor (4) mittels Thyristorschalter (2) phasengeregelt wird, dadurch gekennzeichnet, dass die zugeführte Spannung durch Steigerung desjenigen Anteils der Halbperioden der am Motor angelegten Wechselspannung gesteigert wird, während dem der Motor mit Strom versorgt wird.

3. Verfahren nach Anspruch 2, dadurch gekennzeichnet, dass die Phasenverschiebung durch Abtasten der Phasenlage des dem Motor zugeführten Stroms, so wie dieser mittels Optokuppler abgetastet wird, im Verhältnis zur Phasenlage der mittels der Thyristorschalter (2) angelegten Spannung, so wie diese vor den Thyristorschaltern (2) abgetastet wird, bestimmt wird.

4. Verfahren nach Anspruch 2 oder 3, dadurch gekennzeichnet, dass die genannte Phasenverschiebung als der Unterschied ($\triangle$t) zwischen dem Nulldurchgang der Spannung und dem Nulldurchgang des Stroms gemessen wird.

5. Gerät zur Durchführung des Verfahrens nach Anspruch 1 beim Anlassen eines mittels Thyristorschalter phasengesteuerten Asynchronmotors (4), gekennzeichnet durch einen Stromdetektor (5) zum Erzeugen eines die Phase des Motorstroms repräsentierenden Signals, einen Spannungsdetektor (6) zum Erzeugen eines die Phase der Motorspannung repräsentierenden Signals, einen Phasendetektor (7) zum Erzeugen eines den Phasenunterschied zwischen der Motorspannung und dem Motorstrom repräsentierenden Signals, Glieder (8) zum Ermitteln einer einen vorbestimmten Wert übersteigenden Änderung des genannten Phasenunterschieds, und Glieder (8), die beim Anlassen des Motors denjenigen Anteil der Halbperioden der am Motor angelegten Wechselspannung steigern, während dem der Motor mit Strom versorgt wird, bis die genannte Phasenunterschiedsänderung ermittelt wird, wonach der genannte Anteil langsamer gesteigert wird, bis die zugeführte Spannung ihren vollen Wert erreicht hat.

6. Gerät zur Regelung des Anlassens eines mittels Thyristorschalter phasengeregelten Asynchronmotors (4), gekennzeichnet durch einen Stromdetektor (5) zum Erzeugen eines die Phase des Motorstroms repräsentierenden Signals, einen Spannungsdetektor (6) zum Erzeugen eines die Phase der Motorspannung repräsentierenden Signals, einen Phasendetektor (7) zum Erzeugen eines den Phasenunterschied zwischen der Motorspannung und dem Motorstrom repräsentierenden Signals, Glieder (8) zum Ermitteln einer einen vorbestimmten Wert übersteigenden Änderung des genannten Phasenunterschieds, und Glieder (8), die beim Anlassen des Motors denjenigen Anteil der Halbperioden der am Motor angelegten Wechselspannung steigern, während dem der Motor mit Strom versorgt wird, bis die genannte Phasenunterschiedsänderung ermittelt wird, wonach der genannte Anteil langsamer gesteigert wird, bis die zugeführte Spannung ihren vollen Wert erreicht hat.

**Revendications**

1. Procédé de démarrage d'un moteur asynchrone (4), caractérisé en ce que la tension fournie est rapidement augmentée jusqu'à la détection d'un changement de la dérivée du déphasage entre la tension appliquée, et le courant fourni, et en ce que la tension fournie est alors augmentée plus lentement jusqu'à ce que la tension fournie ait atteint sa valeur maximale.

2. Procédé selon la revendication 1, dans lequel le moteur (4) est commandé en phase par des commutateurs à thyristor (2), caractérisé en ce que la tension fournie est augmentée par augmentation de la proportion des demipériodes de la tension alternative appliquée au moteur, proportion pendant laquelle le moteur reçoit le courant.

3. Procédé selon la revendication 2, caractérisé en ce que le déphasage est déterminé par détection de la position de la phase du courant fourni au moteur, détectée par des optocoupleurs, par rapport à la position de la phase de la tension appliquée à l'aide des commutateurs à thyristor (2), détectée en amont de ces commutateurs à thyristor (2).

4. Procédé selon la revendication 2 ou 3, caractérisé en ce que le déphasage est mesuré comme la différence ($\triangle$t) entre le passage à zéro de la tension et le passage à zéro du courant.

5. Appareil destiné à la mise en oeuvre du procédé selon la revendication 1, pendant le démarrage d'un moteur asynchrone (4) commandé en phase à l'aide de commutateurs à thyristor, caractérisé par un détecteur (5) d'intensité du courant destiné à créer un signal représentant la phase du courant du moteur, un détecteur de tension (6) destiné à créer un signal représentant la phase de la tension du moteur, un détecteur de déphasage (7) destiné à créer un signal représentant le déphasage entre la tension et le courant du moteur, un dispositif (8) de détection d'un changement de la dérivée du déphasage, et un dispositif (8) destiné à augmenter rapidement, lors de la mise en route du moteur, la proportion des demi-périodes de la tension alternative qui est appliquée au moteur, proportion pendant laquelle le moteur reçoit le courant, jusqu'à ce que le changement de la dérivée du déphasage soit détecté, et à augmenter alors ladite proportion plus lentement jusqu'à ce que la tension fournie ait atteint se valeur, maximale.

6. Appareil de commande du démarrage d'un moteur asynchrone (4) commandé en phase à l'aide de commutateurs à thyristor, caractérisé par un détecteur (5) d'intensité du courant, destiné à créer un signal représentant la phase du courant du moteur, un détecteur (6) de tension destiné à créer un signal représentant la phase de la tension du moteur, un détecteur de déphasage (7) destiné à créer un signal représentant le déphasage entre la tension et le courant du moteur, un dispositif (8) destiné à détecter un changement du déphasage qui dépasse une valeur prédéterminée, et un dispositif (8) destiné à augmenter rapidement, lors de la mise en fonctionnement du moteur, la proportion des demi-périodes de la tension alternative qui est appliquée au moteur, proportion pendant laquelle le moteur reçoit le courant, jusqu'à la détection dudit changement de déphasage, et à augmenter alors ladite proportion plus lentement jusqu'à ce que la tension fournie ait atteint sa valeur maximale.

FIG. 1

TORQUE

INCREASING VOLTAGE

MIN. STARTING TORQUE

SPEED

FIG. 3

U

Δt

I

FIG. 2

$\overline{U}$

$\overline{I}$

$\varphi$

S=0

$\overline{I_k}$

S=1

FIG. 4

FIG. 5